# FASCICULE DE BREVET EUROPEEN

(11) **EP 2 924 467 B1**
(45) Date de publication et mention de la délivrance du brevet: **01.05.2024**
(21) Numéro de dépôt: 15160030.1
(22) Date de dépôt: 20.03.2015
(51) Int. Cl.: G01S 19/20, G01S 19/42

(54) **PROCEDE DE GEOPOSITIONNEMENT AVEC INDICE DE CONFIANCE ET TERMINAL ASSOCIE**
GEOPOSITIONIERUNGSVERFAHREN MIT KONFIDENZINDEX, UND ENTSPRECHENDES ENDGERÄT
GEOPOSITIONING METHOD WITH CONFIDENCE INDEX AND ASSOCIATED TERMINAL

(30) Priorité: 21.03.2014 FR 1400685
(43) Date de publication de la demande: 30.09.2015
(73) Titulaire: THALES, 92190 Meudon (FR)
(72) Inventeur: MONNERAT, Michel, 31240 SAINT-JEAN (FR); SERANT, Damien, 31100 TOULOUSE (FR)
(74) Mandataire: Atout PI Laplace

(56) Documents cités:
- EP-A1- 1 965 219
- EP-A1- 2 037 290
- WO-A2-2007/086894
- US-A1- 2008 158 053
- US-A1- 2012 299 770
- US-A1- 2013 154 879
- US-B1- 6 211 822
- LIU M ET AL: "A Recursive Quasi-optimal Fast Satellite Selection Method for GNSS Receivers", GNSS 2009 - PROCEEDINGS OF THE 22ND INTERNATIONAL TECHNICAL MEETING OF THE SATELLITE DIVISION OF THE INSTITUTE OF NAVIGATION (ION GNSS 2009), THE INSTITUTE OF NAVIGATION, 8551 RIXLEW LANE SUITE 360 MANASSAS, VA 20109, USA, 25 September 2009 (2009-09-25), pages 2061-2071, XP056010656,

## Description

La présente invention concerne le domaine du géopositionnement par satellites. La présente invention concerne plus particulièrement un procédé de géopositionnement avec indice de confiance.

Les dispositifs de géopositionnement (ou géolocalisation) par satellites appelés sous le nom plus complet de système de positionnement et de datation par satellites ou sous leur sigle anglais GNSS pour Global Navigation Satellite System, calculent la position du terminal de réception en mesurant le temps de propagation des signaux émis par les satellites de positionnement entre les satellites et le terminal de réception. Chaque satellite de géopositionnement émet un message codé contenant un certain nombre d'informations, dont sa propre position et l'instant exact de l'émission du signal. Afin d'estimer sa position, le terminal de géopositionnement mesure le temps écoulé entre l'émission et la réception du message codé et par là en déduit la distance qui le sépare du satellite. Des mesures sur au moins quatre satellites fournissent les distances nécessaires à la détermination des trois coordonnées de la position à savoir la latitude, la longitude et l'altitude. Ce type de mesures est connu sous la dénomination de "pseudo-distances" dans la terminologie GPS.

Dans un milieu dit contraint, c'est à dire dans lequel les conditions de réception des signaux GNSS ne sont pas favorable, par exemple du fait des problèmes de multitrajet, du masquage, des interférences, la position estimée par le terminal n'est pas toujours exacte et l'utilisateur ne dispose d'aucune information sur la qualité de la position calculée.

Actuellement il existe un système d'augmentation GNSS, ou SBAS pour Satellite Based Augmentation System, qui permet d'améliorer la précision du GPS (pour Global Positioning System) en réduisant la marge d'erreur du système. Ce système d'augmentation surveille le système GPS et renvoie à l'utilisateur des informations sur la qualité des satellites de positionnement, sur la qualité de la propagation des signaux ainsi que des valeurs de correction. Ces algorithmes visent à fournir à l'utilisateur une solution PVT+I (pour Position, Velocity, Time, Integrity) dans laquelle l'intégrité est issue de l'utilisation d'estimation d'indicateur de qualité sur l'état du système GNSS, typiquement sur l'orbito-synchro des satellites, mais aussi estimation de l'erreur de propagation causée par la ionosphère. Ainsi l'utilisateur, au lieu de calculer sa position, calcule la bulle dans laquelle il se trouve, c'est-à-dire sa position plus une estimée de l'erreur commise.

Un inconvénient de ce système est qu'il a été conçu pour l'aviation civile et ne fonctionne pas correctement pour un utilisateur sur terre. En effet, sur terre et notamment en milieu urbain, il existe des phénomènes de propagation locaux qu'un système de surveillance de la constellation GPS ne peut pas anticiper et donc ne peut pas corriger. Parmi les phénomènes de propagation locaux en milieu urbain, on peut citer par exemple, les phénomènes de masquage ou de multitrajets liés à la présence d'immeubles.

Il existe également, dans l'état de la technique, un algorithme RAIM pour Receiver Autonomous Integrity Monitoring, capable de détecter la défaillance d'un satellite de géopositionnement et d'exclure ce satellite en panne de façon à ce que le récepteur GPS ne prenne plus en compte les données erronées qu'il transmet. La technique consiste à mélanger l'ensemble des signaux de géopositionnement disponibles pour calculer une position. L'algorithme évalue ensuite, grâce à la redondance de mesure, la cohérence entre les différentes pseudo-distances calculées en fonction du point estimé. Cette technique a pour principale limitation le fait qu'elle nécessite un grand nombre de mesures. Elle n'est donc pas adaptée au cas d'utilisation en présence de fort masquage. Les documents de brevets portant les références EP 1965 219 A1, US2013/0154879 A1, ainsi que la publication portant la référence XP_56010656A_I décrivent différentes application basées sur cette technique.

Il est également connu dans l'art antérieur, notamment par une publication de Mezentsev, des technologies de type " batch ". Ces technologies ont été développées dans le but d'hybrider de manière lâche un capteur inertiel et un nombre de mesures GNSS trop faible pour calculer une position instantanée. La technologie vise donc à propager la différence de position de l'utilisateur entre deux instants via le capteur inertiel du terminal de géopositionnement. Cette propagation est alors utilisée pour établir la position, la vitesse et le temps exact (PVT pour Position, Velocity and precise Time selon la terminologie anglosaxonne) sur l'ensemble des pseudo-distances accumulées au cours du temps.

Un problème se pose lorsque le terminal 10 de géopositionnement n'est pas équipée de centrale inertielle.

Le document de brevet portant la référence WO007/086894 A2 décrit un procédé de géopositionnement par satellite permettant l'exploitation des mesures de signaux satellites issus de satellites appartenant à des constellations de satellites distinctes.

La présente invention a pour but de pallier au moins certains inconvénients de l'art antérieur en proposant notamment un procédé de géopositionnement par satellites permettant de fournir à l'utilisateur une indication sur la qualité de la mesure de position estimée.

A cet effet, l'invention a pour objet un procédé de géopositionnement avec indice de confiance mis en oeuvre par un terminal de géopositionnement dans lequel le positionnement du terminal est estimé à l'aide de satellites de géopositionnement et ledit indice de confiance est fourni par comparaison avec au moins une mesure de pseudodistance relevée à l'aide d'au moins un satellite de géopositionnement supplémentaire différent de ceux utilisés pour calculer la position du terminal.

L'établissement de l'indice de confiance comprend :
- Une étape d'estimation de la position du terminal de géopositionnement à l'aide de satellites de géopositionnement,
- une première étape de détermination de la position dudit terminal pour au moins un instant to donné, ladite position étant déterminée à partir des signaux reçus d'au moins quatre satellites de géopositionnement appartenant à une première constellation; - une deuxième étape de détermination de la valeur d'un indice de confiance, ledit indice de confiance étant fonction de la position dudit terminal déterminée au cours de l'étape précédente et d'au moins une mesure de pseudo distance effectuée à partir du signal de positionnement transmis par un satellite supplémentaire appartenant à une seconde constellation distincte de la première constellation; - une troisième étape de comparaison de la valeur de l'indice de confiance déterminée lors de la deuxième étape, à une valeur seuil prédéterminée, le résultat de la comparaison déterminant le niveau de confiance attribué à la détermination de la position du terminal effectuée au moyen des satellites de la première constellation ; la première étape de détermination, à un instant t o , de la position du terminal fournissant la position théorique initiale (Po ) du terminal de géopositionnement, la deuxième étape du procédé comporte elle-même les étapes suivantes : - pour au moins trois instants correspondant à trois autres positions successives du terminal : - Une étape d'estimation de la position du terminal à l'instant considéré, effectuée au moyen des satellites de la première constellation ; - une étape de relevé, pour la position considérée, d'une mesure de pseudo distance (d) réalisée à partir du signal de positionnement émis par ledit au moins un satellite de géopositionnement supplémentaire appartenant à ladite seconde constellation ; - une étape de calcul de l'écart (ΔP ) entre la position initiale (Po ) du terminal et la position de ce dernier déterminée, pour l'instant considéré, au moyen des satellites de la première constellation ; - une étape de modification de la mesure de pseudodistance (d) réalisée au moyen de la différence de position (Δ P ) calculée, de façon à obtenir une mesure de pseudo distance corrigée (d'), correspondant à la mesure de pseudo distance qui aurait été réalisée par le terminal si le terminal était localisé, à l'instant considéré, à la position initiale (Po ) ; - une étape de détermination de la position du terminal à l'aide de la mesure de pseudodistance relevée à la position initiale (Po ) et des au moins trois mesures de pseudo distances corrigées (d') obtenu à partir du signal de positionnement émis par le satellite de géopositionnement supplémentaire appartenant à ladite seconde constellation, - une étape de calcul de la valeur de l'écart entre la position théorique (Po ) du terminal à l'instant to considéré, estimée à l'aide des satellites de géopositionnement appartenant à la première constellation, et la position théorique du terminal déterminée, pour le même instant, à l'aide des mesures de pseudodistance corrigées obtenues à partir du signal de positionnement émis par le satellite de géopositionnement supplémentaire appartenant à ladite seconde constellation ; l'écart entre les positions déterminées constituant l'indice de confiance associé à la mesure de la position du terminal à l'instant considéré ;la troisième étape du procédé consistant en la comparaison de la valeur de l'écart calculé à une valeur seuil prédéterminée.

Selon une variante de mise en oeuvre, le terminal de géopositionnement est dépourvu de centrale inertielle.

Un autre objet de l'invention est un terminal de géopositionnement comprenant au moins un module de calcul configuré pour mettre en oeuvre le procédé défini précédemment.

D'autres particularités et avantages de la présente invention apparaîtront plus clairement à la lecture de la description ci-après, donnée à titre illustratif et non limitatif, et faite en référence au dessin annexé, dans lequel :
- La figure 1 illustre un premier exemple de mise en oeuvre du procédé selon l'invention ;
- La figure 2 illustre un exemple d'un deuxième mode de mise en oeuvre du procédé selon l'invention pour deux positions différentes de l'utilisateur ;

La présente invention à pour objet un procédé de positionnement par satellites avec indice de confiance. Le principe de l'invention consiste à estimer une position à l'aide des signaux diffusés par des satellites de géopositionnement visibles du terminal de géopositionnement puis à utiliser une mesure de pseudodistance à partir d'un satellite non utilisé pour le calcul de position pour obtenir une information sur la précision de la mesure de position effectuée. Par la suite, cette information sur la précision sera appelée " indice de confiance ".

Bien entendu, afin d'affiner l'indice de confiance, un nombre plus important de mesure de pseudodistance peut être réalisé.

Suivant un mode de mise en oeuvre, le ou les satellites utilisés pour établir l'indice de confiance peut faire partie d'une constellation différente de celle utilisée pour estimer la position du terminal de géopositionnement. Suivant un exemple nullement limitatif, la première constellation pour estimer la position théorique peut être le système GPS et la deuxième constellation permettant l'établir le degré de confiance peut être le système Galiléo, GLONASS, IRNSS ou tout autre système de positionnement par satellite équivalent. Bien entendu, toute combinaison de ces constellations est possible.

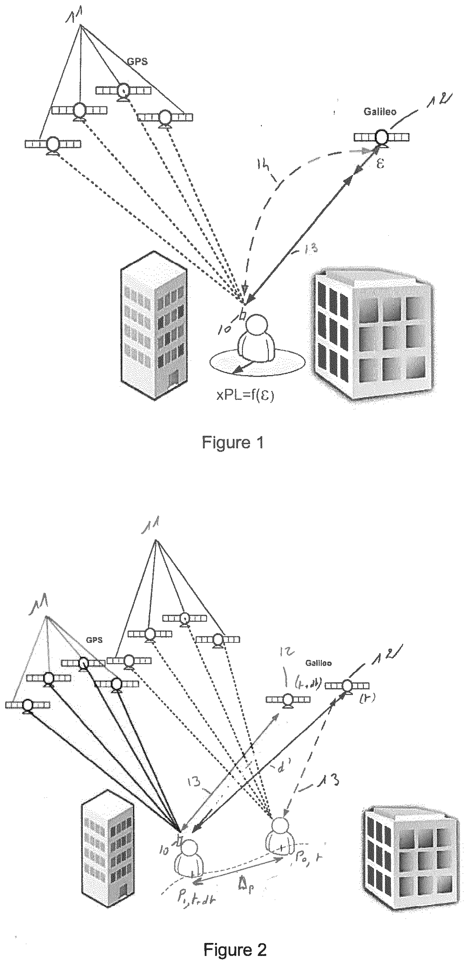

En référence à la figure 1, un premier mode de mise en oeuvre va être présenté.

Le procédé selon l'invention peut comprendre une étape d'estimation de la position du terminal 10 de géopositionnement à l'aide de satellites de géopositionnement 11, une étape de relevé d'une mesure de pseudodistance 13 à l'aide d'au moins un satellite de géopositionnement supplémentaire 12 différent de ceux utilisés pour l'estimation de la position du terminal 10 de géopositionnement, une étape de calcul de la distance géométrique entre la position théorique estimée et la position de chaque satellite supplémentaire 12 et une étape de comparaison de la différence entre au moins une pseudodistance relevée et la distance géométrique calculée correspondante par rapport à une valeur seuil prédéterminée.

De façon connue, l'estimation de la position théorique du terminal 10 de géopositionnement peut être obtenue en démodulant les signaux d'au moins quatre satellites 11 de géopositionnement visibles du terminal 10.

Afin de valider la position théorique obtenue et obtenir un indice de confiance sur l'estimation de la position, le terminal 10 de géopositionnement démodule les signaux émis par au moins un satellite 12 différent de ceux ayant servis à l'estimation de la position théorique de façon à obtenir une mesure de pseudodistance 13.

Connaissant la position du satellite de géopositionnement supplémentaire 12, le terminal 10 de géopositionnement peut calculer la distance géométrique entre la position théorique estimée du terminal 10 et le satellite supplémentaire 12 de géopositionnement.

Dans le cas où plusieurs mesures supplémentaires ont été relevées, le terminal 10 de géopositionnement mesurera autant de distance géométrique 14 que de mesures de pseudodistance 13 relevées.

La mesure de pseudodistance 13 est ensuite comparée à la mesure géométrique 14 calculée. Si la distance géométrique 14 calculée est différente de la pseudodistance 13 relevée, le terminal 10 de géopositionnement peut estimer l'erreur ε de position en calculant la différence entre ces deux mesures. L'erreur ε est ensuite comparée à une valeur seuil prédéterminée. Si l'erreur ε mesurée est supérieure au seuil prédéterminé, l'indice de confiance sera considéré comme mauvais et dans le cas contraire, cet indice sera considéré comme acceptable.

Dans le cas où le satellite de géopositionnement supplémentaire 12 appartient à une constellation différente de celle ayant servie à établir la position théorique, afin de comparer la distance géométrique 14 calculée et la pseudodistance 13 relevée, une correction sera apportée à la mesure de pseudodistance 13 de façon à tenir compte du décalage temporel entre les deux constellations. A titre d'exemple, dans le cas d'utilisation du système GPS et du système Galiléo, ce décalage temporel est donné par le signal GGTO pour GPS Galileo Time Offset.

A partir de l'erreur ε le terminal peut calculer une estimée de l'écart type sur l'erreur de position xPL connue sous le terme anglosaxon "protection level". Ainsi, le terminal 10 de géopositionnement estime les coordonnées d'un point correspondant à sa position et, à partir de l'erreur de position ε, il détermine le disque 15 dans lequel se trouve l'utilisateur.

En référence à la figure 2 un deuxième mode de mise en oeuvre est présenté. Cette deuxième implémentation correspond à un mode dynamique.

Le procédé selon l'invention tente de fournir une solution dans le cas où l'utilisateur est en déplacement et son terminal 10 de géopositionnement est dépourvu de centrale inertielle. Bien entendu, la méthode proposée peut également être mise en oeuvre par un terminal possédant une centrale inertielle.

Le principe de l'invention va consister à utiliser au moins quatre satellites 11 de géopositionnement pour estimer les différentes positions du terminal 10 de l'utilisateur en mouvement, donc pour propager la position dudit utilisateur. Au moins un satellite supplémentaire 12 différent de ceux servant à estimer la position du terminal 10 de géopositionnement va être utilisé pour relever des mesures de pseudodistance 13 au cours du déplacement de l'utilisateur.

Ce mode de mise en oeuvre peut comprendre une étape d'estimation de la position théorique initiale P₀ du terminal 10 de géopositionnement à l'aide de satellites de géopositionnement 11 et le relevé d'une mesure de pseudodistance 13 à l'aide d'un satellite de géopositionnement supplémentaire 12 différent de ceux utilisés pour l'estimation de la position du terminal 10.

Pour au moins trois positions supplémentaires du terminal, le procédé peut comprendre en outre, une étape d'estimation de la position théorique du terminal 10 de géopositionnement à l'aide de satellites de géopositionnement 11, une étape de relevé de mesure de pseudodistance 13 à l'aide du même satellite de géopositionnement supplémentaire 12 que celui utilisé à l'instant t, une étape de calcul de la différence de position Δ_{P} par rapport à la position initiale P₀ et une étape de modification de la mesure de pseudodistance 13, à l'aide de la différence de position Δ_{P} calculée, en une mesure d' qui aurait été effectuée à la position initiale P₀.

Le procédé peut ensuite comprendre une étape de calcul de position à l'aide de la mesure de pseudodistance relevée à la position initiale et des au moins trois mesures d' et une étape de comparaison de la différence entre la position théorique P₀ estimée à l'aide des satellites 11 de géopositionnement et de la position calculée à l'aide des mesures de pseudodistance par rapport à une valeur seuil prédéterminée.

En référence à la figure 2, on considère un instant t et une position initiale Pₒ de l'utilisateur et donc du terminal 10 de géopositionnement. Comme précédemment, le terminal 10 de géopositionnement calcule sa position théorique P₀ en démodulant les signaux d'au moins quatre satellites 11 de géopositionnement. Le terminal 10 relève ensuite une mesure d₀ de pseudodistance 13 à l'aide d'un satellite supplémentaire 12 différent de ceux ayant servi à calculer la position théorique. Les deux mesures sont stockées par exemple dans une zone mémoire du terminal 10 de géopositionnement.

Au cours du déplacement de l'utilisateur, à l'instant t+dt, le terminal 10 de géopositionnement estime sa nouvelle position théorique P₁. Le terminal 10 peut ainsi calculer la différence de position Δ_{P} entre la nouvelle position P₁ et la position initiale P₀.

A l'instant t+dt, le terminal 10 relève également la mesure d₁ de pseudodistance 13 à l'aide du même satellite supplémentaire 12 qu'à l'instant t. Grâce à la différence de position Δ_{P} calculée, le terminal 10 peut reporter cette nouvelle mesure d₁ de pseudodistance 13 à une mesure d'₁ qui aurait été effectuée à la position P₀.

Lors du déplacement de l'utilisateur, le satellite supplémentaire 12 s'est également déplacé vers une nouvelle position connue du terminal 10 de géopositionnement. Le fait de ramener la mesure de pseudodistance d₁ à une mesure d'₁ qui aurait été effectuée à la position P₀ revient à faire comme si l'utilisateur ne s'était pas déplacé et que seul le satellite de géopositionnement supplémentaire 12 s'était déplacé. Cela revient à considérer un utilisateur statique qui relèverait une deuxième mesure de pseudodistance vers un satellite de géopositionnement virtuel.

Si on réitère au moins deux fois cette opération, on obtient au moins quatre mesures de pseudodistance vers des satellites virtuels, on peut ainsi calculer les coordonnées de la position initiale P₀.

Cette position est ensuite comparée à la position P₀ théorique estimée à l'instant t. Si l'écart entre les deux mesures est supérieur à un seuil prédéterminé, l'indice de confiance est considéré comme mauvais. Dans le cas contraire, cet indice est considéré comme acceptable.

Dans ce deuxième mode de mise en oeuvre du procédé selon l'invention, avec un seul satellite de géopositionnement 12 on synthétise un groupe de satellites de géopositionnement fictifs de façon à pouvoir calculer une position.

La présente invention a également pour objet un terminal 10 de géolocalisation par satellites apte à mettre en oeuvre le procédé selon l'invention. Ce terminal peut posséder au moins un module de réception apte à recevoir au moins un signal électromagnétique émis par des satellites 11, 12 de géolocalisation, au moins un module de calcul et au moins une zone mémoire. Le module de calcul peut comprendre un processeur configuré ou programmé pour implémenter le procédé selon l'invention.

Selon un mode de réalisation particulier, le terminal 10 de géopositionnement mettant en oeuvre le procédé selon l'invention peut comprendre une centrale inertielle.

## Revendications

1. Procédé de géopositionnement avec détermination d'un indice de confiance, mis en oeuvre par un terminal (10) de géopositionnement, le procédé comporte:
- une première étape de détermination de la position dudit terminal pour au moins un instant t₀ donné, ladite position étant déterminée à partir des signaux reçus d'au moins quatre satellites de géopositionnement (11) appartenant à une première constellation;
- une deuxième étape de détermination de la valeur d'un indice de confiance, ledit indice de confiance étant fonction de la position dudit terminal déterminée au cours de l'étape précédente et d'au moins une mesure de pseudo distance (13) effectuée à partir du signal de positionnement transmis par un satellite supplémentaire (12) appartenant à une seconde constellation distincte de la première constellation;
- une troisième étape de comparaison de la valeur de l'indice de confiance déterminée lors de la deuxième étape, à une valeur seuil prédéterminée, le résultat de la comparaison déterminant le niveau de confiance attribué à la détermination de la position du terminal (10) effectuée au moyen des satellites (11) de la première constellation ;
la première étape de détermination, à un instant t₀, de la position du terminal (10) fournissant la position théorique initiale (P₀) du terminal (10) de géopositionnement, la deuxième étape du procédé comporte elle-même les étapes suivantes :
- pour au moins trois instants correspondant à trois autres positions successives du terminal (10) :
- Une étape d'estimation de la position du terminal (10) à l'instant considéré, effectuée au moyen des satellites (11) de la première constellation ;
- une étape de relevé, pour la position considérée, d'une mesure de pseudo distance (13) (d) réalisée à partir du signal de positionnement émis par ledit au moins un satellite de géopositionnement supplémentaire (12) appartenant à ladite seconde constellation ;
- une étape de calcul de l'écart (Δ_{P}) entre la position initiale (P₀) du terminal et la position de ce dernier déterminée, pour l'instant considéré, au moyen des satellites (11) de la première constellation ;
- une étape de modification de la mesure de pseudodistance (13) (d) réalisée au moyen de la différence de position (Δ_{P}) calculée, de façon à obtenir une mesure de pseudo distance corrigée (d'), correspondant à la mesure de pseudo distance qui aurait été réalisée par le terminal (10) si le terminal était localisé, à l'instant considéré, à la position initiale (P₀) ;
- une étape de détermination de la position du terminal (10) à l'aide de la mesure de pseudodistance relevée à la position initiale (P₀) et des au moins trois mesures de pseudo distances corrigées (d') obtenu à partir du signal de positionnement émis par le satellite de géopositionnement supplémentaire (12) appartenant à ladite seconde constellation,
- une étape de calcul de la valeur de l'écart entre la position théorique (P₀) du terminal à l'instant t₀ considéré, estimée à l'aide des satellites (11) de géopositionnement appartenant à la première constellation, et la position théorique du terminal déterminée, pour le même instant, à l'aide des mesures de pseudodistance corrigées obtenues à partir du signal de positionnement émis par le satellite de géopositionnement supplémentaire (12) appartenant à ladite seconde constellation ; l'écart entre les positions déterminées constituant l'indice de confiance associé à la mesure de la position du terminal (10) à l'instant considéré ;
la troisième étape du procédé consistant en la comparaison de la valeur de l'écart calculé à une valeur seuil prédéterminée.

2. Procédé selon la revendication 1 dans lequel le terminal (10) de géopositionnement est dépourvu de centrale inertielle.

3. Terminal de géopositionnement **caractérisé en ce qu'**il comprend au moins un module de calcul configuré pour mettre en oeuvre le procédé selon une des revendications précédentes.

## Patentansprüche

1. Geopositionierungsverfahren mit Bestimmung eines Vertrauensindex, das von einem Geopositionierungsendgerät (10) implementiert wird, wobei das Verfahren Folgendes umfasst:
- einen ersten Schritt des Bestimmens der Position des Endgeräts für mindestens einen gegebenen Zeitpunkt t₀, wobei die Position auf der Basis von den von mindestens vier Geopositionierungssatelliten (11) empfangenen Signalen bestimmt wird, die zu einer ersten Konstellation gehören;
- einen zweiten Schritt des Bestimmens des Wertes eines Vertrauensindex, wobei der Vertrauensindex von der im vorherigen Schritt bestimmten Position des Endgeräts und von mindestens einer Pseudoentfernungsmessung (13) abhängt, die auf der Basis des Positionierungssignals durchgeführt wird, das von einem zusätzlichen Satelliten (12) gesendet wird, der zu einer zweiten, sich von der ersten Konstellation unterscheidenden Konstellation gehört;
- einen dritten Schritt des Vergleichens des im zweiten Schritt bestimmten Wertes des Vertrauensindex mit einem vorbestimmten Schwellenwert, wobei das Ergebnis des Vergleichs das Vertrauensniveau bestimmt, das der mittels der Satelliten (11) der ersten Konstellation durchgeführten Bestimmung der Position des Endgeräts (10) zugeordnet wird;
wobei der erste Schritt des Bestimmens, zu einem Zeitpunkt t₀, der Position des Endgeräts (10) die theoretische Anfangsposition (P₀) des Geopositionierungsendgeräts (10) bereitstellt, wobei der zweite Schritt des Verfahrens seinerseits die folgenden Schritte umfasst:
- für mindestens drei Zeitpunkte entsprechend drei weiteren aufeinanderfolgenden Positionen des Endgeräts (10):
- einen Schritt des Schätzens der Position des Endgeräts (10) zu dem betrachteten Zeitpunkt, der mittels der Satelliten (11) der ersten Konstellation durchgeführt wird;
- einen Schritt des Erfassens, für die betrachtete Position, eines Pseudoentfernungsmesswerts (13) (d), der anhand des Positionierungssignals durchgeführt wird, das von dem mindestens einen zusätzlichen Geopositionierungssatelliten (12) der zweiten Konstellation ausgesendet wird;
- einen Schritt des Berechnens der Abweichung (Δ_{P}) zwischen der Ausgangsposition (P₀) des Endgeräts und seiner letzten Position, die für den betrachteten Zeitpunkt mittels der Satelliten (11) der ersten Konstellation bestimmt wurde;
- einen Schritt des Modifizierens der anhand der berechneten Positionsdifferenz (Δ_{P}) durchgeführten Pseudoentfernungsmessung (13) (d), um einen korrigierten Pseudoentfernungsmesswert (d') entsprechend der Pseudoentfernungsmessung zu erhalten, die von dem Endgerät (10) durchgeführt worden wäre, wenn das Endgerät zum betrachteten Zeitpunkt an der Anfangsposition (P₀) lokalisiert worden wäre;
- einen Schritt des Bestimmens der Position des Endgeräts (10) anhand des an der Anfangsposition (P₀) gewonnenen Pseudoentfernungsmesswerts und der mindestens drei korrigierten Pseudoentfernungsmesswerte (d'), die auf der Basis des Positionierungssignals gewonnen wurden, das von dem zu der zweiten Konstellation gehörenden zusätzlichen Geopositionierungssatelliten (12) ausgesendet wird,
- einen Schritt des Berechnens des Wertes der Abweichung zwischen der theoretischen Position (P₀) des Endgeräts zum betrachteten Zeitpunkt t₀, geschätzt anhand der zur ersten Konstellation gehörenden Geopositionierungssatelliten (11), und der für denselben Zeitpunkt anhand der korrigierten Pseudodistanzmesswerte bestimmten theoretischen Position des Endgeräts, die auf der Basis des Positionierungssignals erhalten wurden, das von dem zu der zweiten Konstellation gehörenden zusätzlichen Geopositionierungssatelliten (12) ausgesendet wurde; wobei die Abweichung zwischen den bestimmten Positionen den Vertrauensindex bildet, der mit dem Messwert der Position des Terminals (10) zu dem betrachteten Zeitpunkt assoziiert ist;
wobei der dritte Schritt des Verfahrens im Vergleichen des Wertes der berechneten Abweichung mit einem vorbestimmten Schwellenwert besteht.

2. Verfahren nach Anspruch 1, wobei das Geopositionierungsendgerät (10) keine Trägheitszentrale hat.

3. Geopositionierungsendgerät, **dadurch gekennzeichnet, dass** es mindestens ein Rechenmodul umfasst, das zum Umsetzen des Verfahrens nach einem der vorhergehenden Ansprüche konfiguriert ist.

## Claims

1. A geopositioning method with the establishment of a trust index, implemented by a geopositioning terminal (10), the method comprising:
- a first step of determining the position of said terminal for at least one given time t₀, said position being determined from the signals received from at least four geopositioning satellites (11) belonging to a first constellation;
- a second step of determining the value of a trust index, said trust index being a function of the position of said terminal determined in the previous step and of at least one pseudo-distance measurement (13) made from the positioning signal transmitted by an additional satellite (12) belonging to a second constellation distinct from the first constellation;
- a third step of comparing the value of the trust index determined in the second step with a predetermined threshold value, the result of the comparison determining the level of trust attributed to the determination of the position of the terminal (10) performed by means of the satellites (11) of the first constellation;
the first step of determining, at a time t₀, the position of the terminal (10) providing the initial theoretical position (P₀) of the geopositioning terminal (10), the second step of the method itself comprises the following steps:
- for at least three times corresponding to three other successive positions of the terminal (10):
- a step of estimating the position of the terminal (10) at the time in question, performed by means of the satellites (11) of the first constellation;
- a step of acquiring, for the position in question, a pseudo-distance measurement (13) (d), performed from the positioning signal emitted by said at least one additional geopositioning satellite (12) belonging to said second constellation;
- a step of computing the difference (Δ_{P}) between the initial position (P₀) of the terminal and the determined position of the latter, at the time in question, by means of the satellites (11) of the first constellation;
- a step of modifying the pseudo-distance measurement (13) (d) performed by means of the calculated position difference (Δ_{P}), so as to obtain a corrected pseudo-distance measurement (d'), corresponding to the pseudo-distance measurement that would have been performed by the terminal (10) if the terminal had been located, at the time in question, at the initial position (P₀);
- a step of determining the position of the terminal (10) by means of the pseudo-distance measurement taken at the initial position (P₀) and the at least three corrected pseudo-distance measurements (d') obtained from the positioning signal emitted by the additional geopositioning satellite (12) belonging to said second constellation,
- a step of calculating the value of the difference between the theoretical position (P₀) of the terminal at the time t₀ in question, estimated by means of the geopositioning satellites (11) belonging to the first constellation, and the theoretical position of the terminal determined, for the same time, by means of the corrected pseudo-distance measurements obtained from the positioning signal transmitted by the additional geopositioning satellite (12) belonging to said second constellation; wherein the difference between the determined positions constitutes the trust index associated with the measurement of the position of the terminal (10) at the time in question;
the third step of the method consists in comparing the computed difference with a predetermined threshold value.

2. The method according to claim 1, wherein the geopositioning terminal (10) is devoid of an inertial unit.

3. A geopositioning terminal, **characterised in that** it comprises at least one computation module configured to implement the method according to one of the preceding claims.
